(19) Europäisches Patentamt
European Patent Office
Office européen des brevets

(11) **EP 1 865 022 A1**

(12) **EUROPEAN PATENT APPLICATION**
published in accordance with Art. 158(3) EPC

(43) Date of publication:
**12.12.2007 Bulletin 2007/50**

(51) Int Cl.:
*C08J 9/12* (2006.01)   *B29C 47/88* (2006.01)
*C08L 67/00* (2006.01)   *B29K 67/00* (2006.01)

(21) Application number: **06730503.7**

(22) Date of filing: **29.03.2006**

(86) International application number:
**PCT/JP2006/306555**

(87) International publication number:
**WO 2006/106776 (12.10.2006 Gazette 2006/41)**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **30.03.2005 JP 2005098111
06.04.2005 JP 2005109799**

(71) Applicant: **Asahi Kasei Chemicals Corporation
Tokyo 100-8440 (JP)**

(72) Inventor: **FUJIMOTO, Katsuhiro
Tokyo 100-8440 (JP)**

(74) Representative: **Strehl, Peter
Strehl Schübel-Hopf & Partner
Maximilianstrasse 54
80538 München (DE)**

(54) **FOAMED POLYESTER SHEET**

(57)   The present invention provides a polyester foamed sheet composed of a resin composition comprising 50 to 100 weight% of a polyalkylene terephthalate, wherein the resin composition has an isothermal crystallization peak time of 5 to 60 seconds at any temperature of 100 to 150°C, and wherein the sheet has (A) an apparent density of 0.05 to 1.25 g/cm$^3$ and (B) a temperature at which an exothermic peak derived from crystallization is observed of 0 to 150°C when thermal analysis is performed using an input compensation type differential scanning calorimeter.

**EP 1 865 022 A1**

**Description**

Technical Field

The present invention relates to a foamed sheet comprising a polyalkylene terephthalate and a formed product obtained by thermoforming the sheet. More specifically, the present invention relates to a foamed sheet comprising a polyalkylene terephthalate, excellent in flexibility, light weight properties and thermoformability and capable of providing a formed product excellent in light weight properties, heat resistance, chemical resistance and weather resistance by thermoforming such as vacuum forming, and to a formed product obtained by thermoforming the sheet.

Background Art

Thermoplastic polyester resins typified by polyethylene terephthalate (hereinafter, abbreviated as "PET") resin and polybutylene terephthalate (hereinafter, abbreviated as "PBT") are widely used in injection molded articles, blow molded articles, press molded articles, films, and the like because they are excellent in mechanical characteristics, heat resistance, chemical resistance, dimensional stability and the like.

However, these thermoplastic resins are poorly used in food containers, packaging materials, construction materials, optical reflectors and the like in the form of a foam. This is probably due to the following reasons. For use in these applications, a PET foam sheet needs to be formed by thermoforming such as vacuum forming. For this purpose, it is necessary to use an amorphous PET sheet. However, the PET resin is not crystallized during conventional forming because of its slow rate of crystallization, and can provide only an amorphous formed product low in heat resistance and containing broken cells. On the other hand, the PBT resin can provide only a crystalline sheet because of its extremely rapid rate of crystallization, and cannot offer a formed product by thermoforming. For solving these problems, it is not impossible, although industrially difficult, to crystallize the PET resin by heating on a mold for a long time, but the resulting crystalline formed product is inferior in flexibility because of its high crystalline elastic modulus.

As a formed product whose flexibility is intended to be improved, a white film has been proposed characterized in that one type of thermoplastic resin accounts for 95% or more of the components constituting the film and the film is at least uniaxially oriented and having a particular shape of cells. The white film is obtained by injecting carbon dioxide into a thermoplastic resin in a molten state for dissolution, sheeting the melt mix in a mouthpiece part while bubbling the dissolved carbon dioxide, cooling the resultant sheet on a cast drum, and then orienting and heat-treating the sheet. (See, for example, Patent Document 1). The proposed film has a crystallization rate remaining unchanged from the conventional one because it mainly uses PET resin as a thermoplastic resin, and is difficult to crystallize for the enhancement of heat resistance in conventional forming. If a nucleating agent or the like were used to crystallize the film, it could provide only a formed product inferior in flexibility because the above technique cannot sufficiently reduce the size of the cells.

As a technique for solving these problems, a method employing a polytrimethylene terephthalate (hereinafter, abbreviated as "PTT") resin with a low crystalline elastic modulus has been proposed to be used to provide a white polyester film which contains PTT as the main constituent and has an optical density of 0.3 or more. The method involves mixing the resin with a void-forming thermoplastic resin non-compatible therewith and/or void-forming inorganic particles and forming voids (independent voids) at the interface between these resins or between the PTT resin and the inorganic particles in a film orientation step. (See, for example, Patent Document 2).

However, studies by the present inventors have revealed that use of the technique allows crystallization to proceed in the orientation and can provide only a film which has poor formability and cannot be deep-drawn or undergo a precise transcription. The film also has not lasting flexibility because it assumes not a structure containing independent cells but a structure in which the resin and the space are superposed on each other in layers.

In addition, a foam having an apparent density of 0.001 to 1.2 g/cm$^3$ has also been proposed which is composed of a trimethylene terephthalate polymer comprising 30 weight% or more of trimethylene terephthalate units and having a particular intrinsic viscosity and terminal carboxylic content. (See, for example, Patent Document 3). In this Patent Document, there has been proposed a sheet having a density of 0.36 g/cm$^3$ and a crystallinity of 23%, obtained by adding sodium hydrogen carbonate to the polymer and using n-butane as a foaming agent. However, studies by the present inventors have shown that use of the technique can provide only a formed product which cannot be deep-drawn or undergo a precise transcription owing to its poor formability and is also inferior in flexibility because it not only can provide only a sheet whose crystallization is advanced but also cannot reduce the size of the cells.

As described above, previous techniques cannot provide a foamed sheet which is excellent in flexibility, light weight properties and thermoformability and which can offer a formed product excellent in light weight properties, flexibility, heat resistance, chemical resistance and weather resistance by thermoforming such as vacuum forming.

## EP 1 865 022 A1

Patent Document 1: Japanese Patent Laid-Open No. 5-117501
Patent Document 2: Japanese Patent Laid-Open No. 11-152357
Patent Document 3: Japanese Patent Laid-Open No. 2002-226619

Disclosure of the Invention

Problems to be Solved by the Invention

An object of the present invention is to provide a foamed sheet capable of offering a formed product combining flexibility and heat resistance by thermoforming such as vacuum forming. Another object of the present invention is to provide a formed product obtained by thermoforming the sheet.

Means for Solving the Problems

As a result of intensive studies for solving the above problems, the present inventors have found that an amorphous foamed sheet comprising PTT, containing fine cells, and having a moderate crystallization rate can be made to achieve the above objects, thereby accomplishing the present invention.
Specifically, the present invention is as follows.

(1) A polyester foamed sheet composed of a resin composition comprising 50 to 100 weight% of a polyalkylene terephthalate, wherein the resin composition has an isothermal crystallization peak time of 5 to 60 seconds at any temperature of 100 to 150°C, and wherein the sheet has (A) an apparent density of 0.05 to 1.25 g/cm$^3$ and (B) a temperature at which an exothermic peak derived from crystallization is observed of 0 to 150°C when thermal analysis is performed using an input compensation type differential scanning calorimeter.
(2) The polyester foamed sheet described in term (1), wherein the sheet has a crystallization peak time of 1 to 600 seconds at any temperature of 30 to 120°C.
(3) The polyester foamed sheet described in term (1) or (2), wherein the polyalkylene terephthalate comprises 50 to 100 weight% of polytrimethylene terephthalate.
(4) The polyester foamed sheet described in any one of terms (1) to (3), wherein the sheet has a thickness of 1 $\mu$m to 10 mm.
(5) The polyester foamed sheet described in any one of terms (1) to (4), wherein the sheet contains cells having an average diameter of not more than 1/2 the thickness of the sheet and of 0.001 to 100 $\mu$m.
(6) The polyester foamed sheet described in any one of terms (1) to (5), wherein the resin composition comprises 50 to 99.9 weight% of the polyalkylene terephthalate and 0.1 to 50 weight% of a fluororesin.
(7) The polyester foamed sheet described in term (6), wherein the fluororesin has a melting point of 280°C or more.
(8) The polyester foamed sheet described in term (6) or (7), wherein the fluororesin is polytetrafluoroethylene.
(9) The foamed sheet described in any one of terms (6) to (8), wherein the fluororesin has a particulate shape having an average particle diameter of 0.01 to 100 $\mu$m.
(10) A method of producing a polyester foamed sheet, comprising the steps of: mixing and dissolving, in a melt comprising 50 to 100 weight% of a polyalkylene terephthalate, a substance which is gaseous at the melt temperature of the melt and ordinary pressure; extruding the resultant melt mix from a mouthpiece for sheeting while bubbling the substance; and cool-solidifying the extruded sheet.
(11) The method of producing a polyester foamed sheet as described in term (10), wherein the melt comprises 50 to 99.9 weight% of a polyalkylene terephthalate and 0.1 to 50 weight% of a fluororesin.
(12) The method of producing a polyester foamed sheet as described in term (10) or (11), wherein the substance is gaseous at room temperature and ordinary pressure.
(13) The method of producing a polyester foamed sheet as described in term (12), wherein the substance is at least one selected from the group consisting of nitrogen, helium, argon, and water.
(14) The method of producing a polyester foamed sheet as described in term (13), wherein the substance is nitrogen.
(15) The method of producing a polyester foamed sheet as described in any one of terms (10) to (14), wherein the mouthpiece has a slit shape and the cool-solidifying step comprises the steps of: casting the melt mix on a metal roller; and placing the cast melt mix in water.
(16) A formed foam product obtained by thermoforming the polyester foamed sheet described in any one of terms (1) to (9).
(17) The formed foam product described in term (16), wherein the exothermic peak derived from crystallization is 5 J/g or less when thermal analysis is performed between 0°C and 150°C using an input compensation type differential scanning calorimeter.
(18) A forming method comprising the step of heating and forming the polyester foamed sheet described in any one of terms (1) to (9).

(19) The forming method described in term (18), wherein the polyester foamed sheet is formed by vacuum pressure forming.

(20) The forming method described in term (18) or (19), wherein the step of heating and forming the polyester foamed sheet comprises the steps: heating the sheet at 30 to 100°C; and forming the heated sheet using a mold at 60 to 180°C.

(21) The forming method described in term (18), wherein the step of heating and forming the polyester foamed sheet comprises the step of crystallizing the polyester foamed sheet while allowing the sheet to contact a revolving roller heated at 60 to 180°C to transcript the roller surface thereto.

Advantages of the Invention

The foamed sheet of the present invention is excellent in flexibility, light weight properties and thermoformability and can provide a formed product excellent in light weight properties, flexibility, heat resistance, chemical resistance and weather resistance by thermoforming such as vacuum forming. Thus, the foamed sheet is useful in various applications including food containers, packaging materials, construction materials, and optical reflectors.

Best Mode for Carrying Out the Invention

The present invention is specifically described below.

The polyester foamed sheet of the present invention is a foamed sheet composed of a resin composition comprising 50 to 100 weight% of a polyalkylene terephthalate (hereinafter, abbreviated as "PArT"). Here, the PArT refers to a polyester in which the acid component is composed of terephthalic acid and the glycol component is composed of at least one alkylene glycol selected from among aliphatic glycols, alicyclic glycols and polyalkylene glycols whose alkylene portions have a carbon number of 2 to 12. The proportion of PArT is preferably 70 to 100 weight%, more preferably 80 to 100 weight%, still more preferably 90 to 100 weight% in view of heat resistance and ease of sheet production. Specific examples of the alkylene glycol include ethylene glycol, 1,1-propanediol, 1,2-propanediol, 1,3-propanediol, 2,2-propanediol, 1,2-butanediol, 1,3-butanediol, 1,4-butanediol, neopentyl glycol, 1,5-pentamethylene glycol, hexamethylene glycol, heptamethylene glycol, octamethylene glycol, decamethylene glycol, dodecamethylene glycol, 1,2-cyclohexanediol, 1,3-cyclohexanediol, 1,4-cyclohexanediol, 1,2-cyclohexanedimethanol, 1,3-cyclohexanedimethanol, and 1,4-cyclohexanedimethanol. Among these PArTs, PET, PTT or PBT is preferable which uses ethylene glycol, 1,3-propanediol or 1,4-propanediol as an alkylene glycol, considering that they are excellent in heat resistance and ease of sheet production.

The PArT may comprise another copolymerized component. Examples of the copolymerized component include an alkylene glycol other than that primarily used; an ester-forming monomer such as 5-sodium sulfoisophthalate, 3,5-dicarboxylic acid benzenesulfonic acid tetramethylphosphonium salt, isophthalic acid, oxalic acid, succinic acid, adipic acid, dodecanedioic acid, fumaric acid, maleic acid, and 1,4-cyclohexanedicarboxylic acid; polyethylene glycol, polypropylene glycol, and polytetramethylene glycol; and a copolymer thereof. In order to increase the thermal stability of the sheet in the production thereof and the heat resistance of the formed product, the content of such a component as to undergo random copolymerization reducing the crystalline melting point and the ultimate crystallinity is preferably 30 mole% or less, more preferably 20 mole% or less, still more preferably 10 mole%.

Among these PArTs, a PArT is preferable which comprises 50 to 100 weight% of PTT repeating units having terephthalic acid as the acid component and trimethylene glycol (also referred to 1,3-propanediol; hereinafter, abbreviated as "TMG") as the diol component in order to easily achieve the object of the present invention in that a sheet is made which is excellent in flexibility and thermoformability and can provide a formed product excellent in heat resistance, flexibility, chemical resistance and weather resistance by thermoforming such as vacuum forming. In other words, 50 to 100 weight% of the polyalkylene terephthalate is preferably polytrimethylene terephthalate. This is probably due firstly to a moderate crystallization rate inherent in PTT, secondly to chemical stability resulting from the molecular structure of PTT, a type of saturated polyester having low chemical reactivity, and thirdly to crystalline flexibility coming from the zigzag structure of the molecular skeleton.

The polymerization degree of the PArT of the present invention is preferably in the range of from 0.5 to 4 dl/g in terms of intrinsic viscosity [η]. An intrinsic viscosity of 0.5 dl/g or more facilitates the production of the sheet and makes easy the micronization of the cell size, which facilitates making a foamed sheet and a formed product which are excellent in strength and flexibility. On the other hand, 4.0 dl/g or less facilitates sheeting the PArT. The intrinsic viscosity [η] is more preferably in the range of from 0.7 to 3 dl/g, still more preferably from 0.9 to 2.5 dl/g, particularly preferably 1.0 to 2 dl/g.

The PArT of the present invention preferably has a carboxyl terminal group concentration of 0 to 80 eq/ton based on the PArT component. This is because it can increase the weather resistance, chemical resistance, hydrolysis resistance and heat resistance of the sheet and the formed product. The carboxyl terminal group concentration is more preferably 0 to 50 eq/ton, still more preferably 0 to 30 eq/ton, particularly preferably 0 to 20 meq/kg; the lower concentration is better.

For a similar reason, the PArT preferably has a content of 0 to 2 weight% of a glycol dimer component in which the glycol components are bonded via ether bonding. Examples of the glycol dimer component include a bis(3-hydroxypropyl)ether component (structural formula: - $OCH_2CH_2CH_2OCH_2CH_2CH_2O$-, hereinafter abbreviated as "BPE") for PTT and a bis(hydroxyethyl)ether component (structural formula: -$OCH_2CH_2OCH_2CH_2O$-, hereinafter abbreviated as "BEE") for PET. The content of the dimer component is more preferably 0.1 to 1.5 weight%, still more preferably 0.15 to 1.2 weight%.

The foamed sheet of the present invention may also contain organic and inorganic substances and various additives in addition to the PArT. Even in such cases, the proportion of the PArT needs to be in the above-described range. In this respect, the proportion of the PArT or PTT can be determined by analysis using 1 H nuclear magnetic resonance spectroscopy (hereinafter, abbreviated as "NMR") employing HFIP:CDC13 = 1:1 as a solvent. Here, the proportion of the PArT is calculated so as to include that of various PArT oligomers (including unreacted monomers) such as a cyclic dimer and various glycol dimer components.

Examples of the organic substance other than the PArT include cyclic and linear PArT oligomers, monomers of acid and glycol components constituting the PArT and low molecular weight reaction products derived therefrom; resins other than the PArT; and various additives. Examples of the resin other than the PArT include thermoplastic polyesters such as polyethylene naphthalate and polypropylene naphthalate; thermoplastic polyamides such as thermosetting polyesters, nylon 6, nylon 66, nylon 11 and nylon 12; polyolefins such as polyethylene and polypropylene; polycarbonates; polyurethanes; fluororesins; silicone resins; polyphenylene sulfites; epoxy resins; acrylic resins; celluloses; and copolymerized resins thereof.

Examples of the inorganic substance other than the PArT include inorganic fillers such as glass fiber, carbon fiber, talc, mica, wollastonite, kaolin clay, calcium carbonate, titanium dioxide, and silica dioxide; inorganic lubricants; and polymerization catalyst residues.

Examples of the additive include organic or inorganic dyes or pigments, delusterants, thermal stabilizers, flame retardants, antistatic agents, antifoaming agents, orthochromatic agents, antioxidants, ultraviolet absorbers, crystal nucleating agents, brighteners, scavengers for impurities, thickeners, and surface conditioners.

The thermal stabilizer is preferably a penta- and/or trivalent phosphorus compound or a hindered phenol compound. The addition amount of the phosphorus compound is preferably 2 to 500 ppm, more preferably 10 to 200 ppm in terms of the weight content of a phosphorus element in the resin composition. Specifically, the phosphorus compound is preferably trimethyl phosphite, phosphoric acid, phosphorous acid, or tris(2,4-di-tert-butylphenyl)phosphite (e.g., Irgafos 168 manufactured by Ciba Specialty Chemicals). The hindered phenol compound is a phenol derivative having a sterically-hindering substituent at a position adjacent to the phenolic hydroxyl group and is a compound having one or more ester bonds in the molecule. The addition amount of the hindered phenol compound is preferably 0.001 to 1 weight%, more preferably 0.01 to 0.2 weight% based on the weight of the resin composition.

Preferred specific examples of the compound include pentaerythritol-tetrakis[3-(3,5-di-tert-butyl-4-hydroxyphenyl)propionate] (e.g., Irganox 1010 manufactured by Ciba Specialty Chemicals), 1,1,3-tris(2-methyl-4-hydroxy-5-tert-butylphenyl)butane, octadecyl-3-(3,5-di-tert-butyl-4-hydroxyphenyl)propionate (e.g., Irganox 1076 manufactured by Ciba Specialty Chemicals), N,N'-hexamethylenebis(3,5-tert-butyl-4-hydroxy-hydrocinnamide), ethylenebis(oxyethylene)bis[3-(5-tert-butyl-4-hydroxy-m-tolyl)propionate] (e.g., Irganox 245 manufactured by Ciba Specialty Chemicals), and N,N'hexan-1,6-diylbis[3-(3,5di-tert-butyl-4-hydroxyphenylpropionamide) (e.g., Irganox 1098 manufactured by Ciba Specialty Chemicals). Off course, it is also one of preferred methods to use these stabilizers in combination.

According to the present invention, it is also preferable to add a scavenger for volatile impurities having low molecular weight. The scavenger is preferably a polyamide or polyesteramide polymer or oligomer, a low molecular weight compound having an amide group or an amine group, or the like. The addition amount thereof is preferably 0.001 to 1 weight%, more preferably 0.01 to 0.2 weight% based on the weight of the resin composition. Preferred specific examples thereof include the following compounds: polymers such as a polyamide (e.g., nylon 6.6, nylon 6, or nylon 4.6) and a polyethyleneimine; a reaction product of N-phenylbenzeneamine with 2,4,4-trimethylpentene (e.g., Irganox 5057 manufactured by Ciba Specialty Chemicals); N,N'hexan-1,6-diylbis[3-(3,5di-tert-butyl-4-hydroxyphenylpropionamide) (e.g., Irganox 1098 manufactured by Ciba Specialty Chemicals); and 2,6-di-tert-butyl-4-(4,6-bis(octylthio)-1,3,5-triazin-2-ylamino)phenol (e.g., Irganox 565 manufactured by Ciba Specialty Chemicals).

Off course, it is also one of preferred methods to use these compounds in combination.

These materials other than the PArT can be present in the form of particles or in a state compatibilized with the polymer molecules; however, according to the present invention, it is preferred that particles having an average diameter of 0.01 to 100 $\mu$m are contained at 0.1 to 30 weight% based on the PArT. The presence of such particles facilitates that the sheet contains a large number of fine cells. The particles more preferably have an average diameter of 0.1 to 50 $\mu$m, still more preferably 0.3 to 20 $\mu$m, particularly preferably 0.5 to 10 $\mu$m. The content of the particles is desirably higher when the average diameter of the particles is larger and may be lower when the average diameter is smaller; however, the content is more preferably about 0.5 to 20 weight%, still more preferably 1 to 15 weight%, particularly preferably 2 to 10 weight%. The particle is preferably a particle in a flat plate or needle form rather than a perfect sphere, and also preferably has projections. In addition, the particle is preferably made of a material which has low compatibility with PArT and is also low in adhesiveness thereto. Specific examples thereof include a powder composed of talc, a fluororesin typified by polytetramethylene, fluorine mica, plate alumina, layer silicate, or the like.

According to the present invention, the resin composition preferably contains 0.1 to 50 weight% of a fluororesin. Containing the fluororesin facilitates the creating of fine cells, although the reason is uncertain. In addition, the fluororesin has high heat resistance, and therefore not only is excellent in the color tone thereof per se even after melt extrusion -molding but also hardly colors the sheet. Further, the resin is relatively soft and does not damage the flexibility of the sheet.

The fluororesin refers to a synthetic polymer containing fluorine atoms in the molecule. Specific examples thereof include polytetrafluoroethylene (hereinafter, abbreviated as "PTFE"), tetrafluoroethylene-hexafluoropropylene copolymer (hereinafter, abbreviated as "FEP"), tetrafluoroethylene-perfluoroalkyl vinyl ether copolymer (hereinafter, abbreviated as "PFA"), polychlorotrifluoroethylene (hereinafter, abbreviated as "PCTFE"), ethylene-tetrafluoroethylene copolymer (hereinafter, abbreviated as "ETFE"), low melting point ethylene-tetrafluoroethylene copolymer (hereinafter, abbreviated as "LM-ETFE"), polyvinylidene fluoride (PVDF), and polyvinyl fluoride. Among these fluororesins, in terms of heat resistance and color tone, preferred are those which are composed of only carbon and fluorine atoms and have melting points of 280°C or more, preferably 300°C or more. Specifically, PTFE and FEP are preferable; PTFE is particularly preferable.

The content of the fluororesin is preferably 0.2 to 50 weight%, more preferably 0.5 to 30 weight%, still more preferably 1 to 20 weight%, particularly preferably 2 to 10 weight%.

Preferably, the fluororesin has a particulate shape having an average particle diameter of 0.01 to 100 $\mu$m and is contained in the foamed sheet. The presence of such fluororesin particles facilitates that the sheet contains a large number of fine cells. The fluororesin preferably has an average particle diameter of 0.1 to 50 $\mu$m, more preferably 0.3 to 20 $\mu$m, particularly preferably 0.5 to 10 $\mu$m. The fluororesin is preferably a particle in a flat plate or needle form rather than a perfect sphere, and also preferably has projections. In this respect, the average particle diameter can be determined using an image analysis software from the cross-sectional image of the sheet observed employing a scanning electron microscope (hereinafter, abbreviated as "SEM").

The thickness of the foamed sheet may be properly selected depending on the purpose and application, but is preferably 1 $\mu$m to 10 mm in order to make the best use of the function of the foamed sheet of the present invention. Not less than 1 $\mu$m makes easy the handling of the sheet; not more than 10 mm facilitates the thermoforming thereof. The thickness is more preferably 10 $\mu$m to 5 mm, still more preferably 50 $\mu$m to 3 mm, particularly preferably 100 $\mu$m to 2 mm.

The polyester foamed sheet needs to be lightweight and excellent in flexibility. This requires that the apparent density thereof is 0.05 to 1.25 g/cm$^3$. This range of density renders excellent the flexibility and, even after thermoforming, makes less easy for the breaking of cells to occur and thereby enables the lightweight properties to be maintained. The apparent density is preferably 0.1 to 1 g/cm$^3$, more preferably 0.15 to 0.8 g/cm$^3$, still more preferably 0.2 to 0.7 g/cm$^3$.

Then, the polyester foamed sheet of the present invention can be easily thermoformed and is crystallized by thermoforming to come to have heat resistance. Thus, the polyester foamed sheet of the present invention shows a change in crystallinity by heat, and is moderate in the change rate of crystallinity (crystallization rate).

Whether the crystallinity can be changed by heat or not can be determined by examining whether an exothermic peak derived from crystallization is observed between 0°C and 150°C or not when thermal analysis is performed using an input compensation type differential scanning calorimeter (hereinafter, abbreviated as "DSC"). The temperature of the polyester foamed sheet of the present invention is 0 to 150°C at which the exothermic peak derived from crystallization is observed when thermal analysis is performed using an input compensation type differential scanning calorimeter. Here, the phrase "the exothermic peak is observed" refers to "a peak of calorie of 1 J/g or more is observed". The calorie is preferably 3 J/g or more, more preferably 5 J/g or more, still more preferably 10 J/g or more. The upper limit is typically 90 J/g or less. In this respect, the thermal analysis was carried out by keeping the sheet at 0°C for 3 minutes ant then increasing the temperature from 0°C to 260°C at the set temperature increase rate of 10°C/minutes.

On the other hand, whether the change rate of crystallinity (crystallization rate) is moderate or not can be determined by examining whether the foamed sheet is composed of a resin composition in which the temperature at which the isothermal crystallization peak time is 5 to 60 seconds is in the range of from 100 to 150°C. The resin composition constituting the polyester foamed sheet of the present invention has an isothermal crystallization peak time of 5 to 60 seconds at any temperature of 100 to 150°C. Here, the isothermal crystallization peak time can be determined as the time at which the crystallization-derived endotherm, shows a peak, which is observed when the sheet is melted, then rapidly cooled to a predetermined temperature, and kept as it is. The range of temperature in which the isothermal crystallization peak time is 5 to 60 seconds is determined by measuring the above peak time every 5°C in the cooling temperature range of 100 to 150°C. When two adjacent points correspond to the above peak times, the temperature range is determined assuming that all temperatures between the two points satisfy the above peak times.

The above temperature range preferably has a continuous width of 5°C or more, more preferably 10°C or more, still more preferably 20°C or more; particularly preferably, the peak time is 5 to 60 seconds over the temperature range of 100 to 150°C.

In addition, the temperature at which the crystallization peak time of the polyester foamed sheet of the present invention is 1 to 600 seconds is preferably in the range of 30 to 120°C. The crystallization peak time of the sheet can be determined by measuring the time at which the crystallization-derived endotherm, shows a peak, which is observed when the sheet is rapidly heated to a predetermined temperature and kept as it is. The temperature range is determined by measuring the above peak time every 5°C in the heating temperature range of 30 to 120°C.

The above-described crystallization peak time indicates a crystallization rate. That the sheet has the above crystallization peak time in the above temperature range means that the sheet has good thermoformability and can be easily crystallized by thermoforming to impart heat resistance.

The above temperature range preferably has a continuous width of 5°C or more, more preferably 10°C or more, particularly preferably 20°C or more.

In addition, the foamed sheet preferably has a crystallinity of 20% or less. Here, the crystallinity was determined from the ratio of the crystalline peak area to the total area on the diffraction pattern obtained by wide angle x-ray diffraction. The crystallinity is more preferably 15% or less, still more preferably 10% or less, even more preferably 5% or less, most preferably 0% (no crystalline peak is observed).

The crystal melting calorie is preferably 20 J/g or more when thermal analysis is performed using DSC. That the sheet has such a calorie indicates an increase in the crystallinity by thermoforming, and means an increase in the heat resistance. The crystal melting calorie is more preferably 30 J/g or more, still more preferably 35 J/g or more, particularly preferably 40 J/g or more.

Such thermal and crystallization characteristics can be achieved by properly selecting the composition of the above-described PArT or by adding an additive such as a crystal nucleating agent; however, particularly, using PTT as the PArT facilitates the obtaining of a foamed sheet which is an object of the present invention.

A large number of cells are present in the foamed sheet of the present invention. The average diameter of the cells is preferably not more than 1/2 the thickness of the polyester foamed sheet and of 0.001 to 100 $\mu$m. In addition, the cell preferably has a ratio of an average size in the surface direction (S) to an average size in the thickness direction (T) (S/T) of 0.5 to 10. Here, the average diameter of the cells indicates the average diameter of the cell cross sections; the average size of the cells in the surface direction (S), the average value of sizes (lengths) of cell cross sections in the direction parallel to the sheet surface; and the average size of the cells in the thickness direction (T), the average value of sizes (heights) of cell cross sections in the direction normal to the sheet surface. The average cell diameter, the average size in the surface direction (S), and the average size in the thickness direction (T) can be determined using an image analysis software from the cross-sectional images obtained by observing the sheet cross sections in both of the MD direction (sheet longitudinal direction) and the TD direction (sheet width direction) employing a scanning electron microscope (hereinafter, abbreviated as "SEM"). The above conditions are satisfied by the average cell diameter and S/T to increase the flexibility and impact resistance of the sheet and facilitate the maintaining of the performance thereof even when an external force is applied. The average cell diameter is more preferably not more than 1/10 the thickness of the sheet and 0.01 to 50 $\mu$m, still more preferably not more than 1/50 and 0.1 to 30 $\mu$m, particularly preferably not more than 1/100 and 0.5 to 20 $\mu$m. S/T is more preferably 0.7 to 5, still more preferably 0.8 to 3, particularly preferably 1 to 2.

The sheet of the present invention desirably has a good color tone. In the absence of coloring using a pigment or dye, the color tone preferably has an L* value as a measure of lightness of 80 or more, more preferably 85 or more, particularly preferably 90 or more. The upper limit of the L* value is not particularly present, but is typically 100 or less. The b* value, a measure of yellowness, is preferably -5 to 10, more preferably -3 to 8, still more preferably -2 to 5.

In addition, the sheet of the present invention preferably has a value, of 50 to 1,500 MPa·cm$^3$/g, provided by dividing the modulus of elasticity in tension by the density. Here, as the modulus of elasticity in tension, there is used the average value of those in MD and TD directions. A sheet having such a value becomes easy to handle while having excellent flexibility. The value provided by dividing the modulus of elasticity in tension by the density is more preferably 100 to 1,200 MPa-cm$^3$/g, still more preferably 200 to 1,100 MPa-cm$^3$/g, particularly preferably 300 to 1,000 MPa-cm$^3$/g.

The method of producing the foamed sheet of the present invention will now be described.

The foamed sheet of the present invention can be obtained by injecting a substance gaseous at the melt temperature of a PArT and ordinary pressure into a melt comprising 50 to 100 weight% of the PArT before mixing and dissolution; then extruding the resultant melt mix from a mouthpiece for sheeting, and bubbling the injected substance; and rapidly cool-solidifying the extruded sheet. Here, the melt refers to a material in a state of having fluidity; all components therein need not to be molten.

The melt comprising 50 to 100 weight% of PArT is extruded from the mouthpiece such as a slit by feeding a PArT composition to a feed section of an extruder, melting and sending the composition by the rotation of a screw, and passing it through a heated flow channel.

The PArT composition can be obtained by a conventional known method. By way of example, a PTT composition can be obtained by using dimethyl terephthalate, trimethylene glycol and optionally another copolymerized component as raw materials to conduct a transesterification reaction under ordinary pressure at a temperature of 180 to 260°C by a conventional method employing titanium tetrabutoxide as a catalyst, followed by a polycondensation reaction under reduced pressure at 220 to 270°C.

According to the present invention, the melt preferably contains particles having an average diameter of 0.01 to 100 $\mu$m; the particles are preferably added in the form of particles having an average diameter of 0.01 to 100 $\mu$m. Addition of such particles facilitates that the sheet contains a large number of fine cells. The particles more preferably have an average particle diameter of 0.1 to 50 $\mu$m, still more preferably 0.3 to 20 $\mu$m, particularly preferably 0.5 to 10 $\mu$m. The content of the particles is desirably higher when the average diameter of the particles is larger and may be lower when the average diameter is smaller; however, the content is more preferably about 0.5 to 20 weight%, still more preferably 1 to 15 weight%, particularly preferably 2 to 10 weight%. The particle is preferably a particle in a flat plate or needle form rather than a perfect sphere, and also preferably has projections. In addition, the particle is preferably made of a material which has low compatibility with PArT and is also low in adhesiveness thereto.

According to the present invention, the melt also preferably comprises a fluororesin. More preferably, the melt comprises 50 to 99.9 weight% of a polyalkylene terephthalate and 0.1 to 50 weight% of a fluororesin. The fluororesin is preferably added in the form of particles having an average diameter of 0.01 to 100 $\mu$m. The addition of such particles facilitates that the above fluororesin in the form of 0.01 to 100 $\mu$m particles is contained in the foamed sheet. The particles added more preferably have an average diameter of 0.1 to 50 $\mu$m, still more preferably 0.3 to 20 $\mu$m, particularly preferably 0.5 to 10 $\mu$m. The particle is preferably a particle in a flat plate or needle form rather than a perfect sphere, and also preferably has projections. In this respect, the average diameter is a value obtained by determining the diameter of the particles dispersed in water using a laser-beam diffraction/scattering method. The fluororesin is available in fired or unfired form depending on the production method; however, according to the present invention, an unfired fluororesin is preferable because it facilitates the reducing of the size of the cells.

Additives including particles such as fluororesin particles, preferable in producing the foamed sheet may be added, for example, by a method involving addition during polymerization, a method involving addition by melt kneading or the like after polymerization or a combined method thereof. The method may be properly selected depending on the type and amount of the additives, the performance required, and the like. In the case of addition of various additives by melt kneading, a PTT composition obtained by polymerization may be charged after cool solidification or directly in a molten state together with the additives into a single-screw or twin-screw extruder or the like.

As the extruder, there may be used a single-screw or twin-screw extruder, a tandem extruder consisting of these two extruders connected in series, or the like. As the extruder screw, a most suitable screw is preferably used depending on the properties of the PArT applied and the substance (gas) injected. The extruder is desirably set at a temperature at which an unmelted material will not remain and the thermal decomposition of the composition can be suppressed; it is preferably set at about the melting point of the PArT composition + 0 to the melting point + 30°C.

According to the present invention, if necessary, a filter is disposed between the extruder and the mouthpiece to remove foreign materials and the like; a gear pump or the like is provided to improve the constant feeding property; a static mixer is placed to enhance the dispersibility of the injected substance; or a heat exchange unit is mounted to make the temperature constant. Here, the pressure and temperature is desirably selected properly so that the substance injected does not become large bubbles near the devices. When disposed, the devices are also desirably set at a temperature at which an unmelted material will not remain and the thermal decomposition of the composition can be suppressed; they are preferably set at about the melting point of the PArT composition + 0 to the melting point + 30°C.

According to the present invention, it is necessary to inject into the melt a substance gaseous at ordinary pressure. An excellent foamed sheet cannot be made without injecting such a substance. The substance is preferably gaseous even at room temperature and ordinary pressure in view of ease of handling. Specific examples thereof include inert compound blowing agents such as nitrogen, carbon dioxide gas, helium, argon, and water; aliphatic hydrocarbon blowing agents such as ethane, propane, butane, ethylene, propylene, petroleum ether, pentanes, hexanes, heptanes, toluene, trichloromethane, tetrachloromethane, trichlorofluoromethane, methanol, 2-propanol, isopropyl ether, and methyl ethyl ketone; methyl chloride, dichloroethane, chloroform, fluoromethane, difluoromethane, trifluoroethane, chlorotrifluoromethane, dichlorodifluoromethane, fluorochloroethane, and dichlorotetrafluoroethane. Specific examples of the fluorocarbon include fron (R-11, R-12), alternative Freon (R-134a), and fron (Freon) halogenated hydrocarbon blowing agents of CFC series such as CFC-11, CFC-12, CFC-113, and CFC-114. Among these substances, preferred are nitrogen, helium, argon, and water, particularly preferably nitrogen, in view of not promoting the crystallization of the sheet and providing a smaller size of cells.

The amount of the substance injected is preferably 0.05 to 10 weight% in view of micronizing the cells and making good the surface condition of the sheet. The injection amount is more preferably 0.1 to 5 weight%.

The injection may be performed at any stage between the extruder and the mouthpiece, but is preferably carried out by injection in the extruder because the substance can be uniformly injected in the melt.

The melt is then extruded from the mouthpiece into a sheet shape and simultaneously foamed by the injected substance by the release of pressure. The mouthpiece may be properly selected depending on the desired shape of a sheet; however, in order to obtain a sheet having a uniform thickness, it is desirable to use such a linear slit as called T die or I die or a circular slit called a ring die. The structure of the mouthpiece is desirably properly designed so that foaming does not occur in the mouthpiece. To this end, it is preferable to ensure that the pressure of the melt in the inlet of the mouthpiece is 10 MPa or more.

The mouthpiece temperature in the extrusion is desirably set at a low level in the range not solidifying the melt; specifically, it is preferably set at as low a level as possible in the range from the melting point of the composition + 0 to the melting point + 30.

The melt which has been extruded into a sheet shape and foamed is then cool-solidified. According to the present invention, the material is preferably rapidly cooled and solidified so that the crystallization of the sheet and the upsizing of the cells are suppressed. Here, the term "rapidly" refers to cooling the material so that the sheet has the above-described thermal characteristics. Specifically, the time taken from extrusion from the mouthpiece to cooling the sheet at the crystallization temperature or less is preferably within 60 seconds, more preferably within 40 seconds, particularly preferably within 20 seconds.

Examples of the cool solidifying method include a method involving contact with a solid such as a cooling roll, controlled at not more than the crystallization temperature of the PArT composition, a method involving allowing the sheet to contact a liquid such as water, and a combined method thereof. Among these methods, most preferred is the method involving casting the melt on a roll and then placing the material in water for cool-solidification. In this respect, the solid such as a cooling roll is preferably a metal solid, which has good heat conductance.

The temperature of the solid or liquid contacted is more preferably 0 to 50°C, still more preferably 0 to 30°C, particularly preferably 0 to 20°C. The time taken from extrusion from the mouthpiece to allowing the sheet to contact the solid or liquid is preferably 0.05 to 10 seconds, more preferably 0.1 to 5 seconds, particularly preferably 0.2 to 2 seconds.

The foamed sheet of the present invention can be thermoformed to make a formed foam product. The formed foam product is preferably crystallized when thermoformed. This can increase the heat resistance. For the degree of crystallization, the crystallization-derived exothermic peak observed between 0°C and 150°C when thermal analysis is performed using DSC is preferably 5 J/g or less, more preferably 3 J/g or less, still more preferably 1 J/g or less; off course, it is most preferable that no such peak is observed.

The crystallinity is preferably 10% or more, more preferably 20% or more. Here, the crystallinity refers to a value determined by wide angle x-ray diffraction.

The apparent density is preferably 0.05 to 1.25 g/cm$^3$, more preferably 0.1 to 1 g/cm$^3$, still more preferably 0.15 to 0.8 g/cm$^3$, particularly preferably 0.2 to 0.7 g/cm3.

The shape of the formed product may be properly selected depending on applications. Examples thereof include a box shape, a cup shape, and a corrugated plate shape.

Methods of thermoforming the sheet into such formed products include press forming, straight forming, drape forming, plug-assist forming, vacuum forming, vacuum pressure forming, and pressure forming. Among these methods, preferred is vacuum pressure forming.

In performing the forming, the sheet is preferably first heated at a temperature of 30°C to 100°C using a means such as heater radiation or a heating plate. This facilitates the softening of the sheet without crystallization, which improves the formability and transcription ability of the sheet. The temperature is more preferably 35 to 90°C, still more preferably 40 to 80°C, particularly preferably 45 to 70°C.

The sheet is then formed by allowing to contact a mold. Here, the mold temperature is preferably 60°C to 180°C. According to the present invention, the foamed sheet is in a nearly amorphous state during shaping to secure the formability thereof, but after shaping it is important to crystallize the formed product to secure the heat resistance thereof. For that purpose, it is desirable to control the mold temperature in a certain range to crystallize the formed product. The mold temperature is preferably 65°C or more to impart sufficient heat resistance to the formed product; it is preferably 180°C or less to suppress the release thereof from the mold or the breaking of cells after forming. The mold temperature is more preferably 80 to 160°C, particularly preferably 100 to 150°C. It is also one of preferred methods to make the sheet at a temperature within the above range by, after forming, increasing the mold temperature or externally heating the mold. The time for contacting the mold is preferably 1 to 600 seconds, more preferably 2 to 300 seconds, still more preferably 5 to 200 seconds, particularly preferably 10 to 100 seconds.

According to the present invention, the thermoforming may be also carried out by superposing two or more sheets. Here, air vent holes are preferably provided in the sheet on the side where pressure is high during forming so that the air between the sheets is easily vented.

According to the present invention, the foamed sheet of the present invention can be crystallized by allowing to contact a revolving roller heated at 60 to 180°C to provide a crystallized film or a sheet-like formed product. Here, the roll surface is made into a mirror surface or any of various patterns including satin to provide a film or sheet-like formed product having a desired surface profile. The time for contacting the revolving roller is preferably 1 to 600 seconds, more preferably 2 to 300 seconds, still more preferably 5 to 200 seconds, particularly preferably 10 to 100 seconds.

Examples

The present invention will be described with reference to Examples. In this respect, the main measurements in Examples were determined by the following methods.

(1) Contents of PArT, PTT and Glycol Dimer Component

The content (weight%) of PArT was determined by 1H-NMR measurement using a solution obtained by dissolving 100 mg of a paint or coating in HFIP:CDC13 =1:1 1 and filtering off the insoluble portion with a membrane filter (1μm, PTFE). The measuring instrument used was FT-NMR DPX-400 (manufactured by Bruker Inc.). The insoluble portion removed by filtration was measured for the weight after vacuum drying, which was used in determining the content of PTT.

(2) Intrinsic Viscosity [η]

Using an Ostwald viscometer, the intrinsic viscosity [η] was determined according to the following equation by extrapolating, to zero concentration, the ratio (η sp/C) of the specific viscosity η sp to the concentration C (g/100 mililitters) in o-chlorophenol at 35°C.

$$[\eta] \quad = \quad \lim_{C \to 0} \quad (\eta \; sp/C)$$

(3) Carboxyl Terminal Group Concentration

In 25 ml of benzyl alcohol was dissolved 1 g of a PTT composition, to which 25 ml of chloroform was then added, followed by titrating the solution with a 1/50 N potassium hydroxide benzyl alcohol solution. The carboxyl terminal group concentration was determined according to the following equation from the titrated value VA (ml) and the blank value V0 where there is no PTT composition contained.

$$\text{Carboxyl terminal group concentration (eq/ton)} = (VA-V0) \times 20$$

(4) Apparent Density

The apparent density was determined by dividing the weight of a foamed sheet when dried at 50°C to reach a constant weight value by the volume thereof. In this respect, the volume was determined by immersing the sheet in water.

(5) Crystallization Calorie Derived from Crystallization

The presence of a crystallization-derived exothermic peak and the area of the exothermic peak were observed by performing a thermal analysis involving keeping a sheet or a formed product at 0°C for 3 minutes and then increasing the temperature from 0°C to 260°C at the set temperature-increase rate of 10°C/min.

(6) Isothermal Crystallization of Resin Composition

Using Pyris 1 (with a cooling unit) manufactured by Perkin Elmer as DSC (input compensation type differential scanning calorimeter), a sheet was temperature increased to 280°C at the temperature increase rate of 500°C/min. before being kept for 2 minutes to melt the sheet and then cooled to X°C at the temperature decrease rate of 500°C/min. before being kept at X°C to measure and determine the time taken for the crystallization-derived endotherm to reach a peak.

(7) Isothermal Crystallization of Sheet

Using Pyris 1 (with a cooling unit) manufactured by Perkin Elmer as DSC (input compensation type differential scanning calorimeter), a sheet was temperature increased to Y°C at the temperature increase rate of 200°C/min. and kept at Y°C to measure and determine the time taken for the crystallization-derived endotherm to reach a peak.

(8) Crystallinity

The crystallinity was determined from the ratio of the crystalline peak area to the total area on the diffraction pattern obtained by wide angle x-ray diffraction. Here, the wide angle x-ray diffraction was performed by the following method.

Measuring apparatus: Wide angle x-ray diffraction apparatus Rotaflex RU-200 (manufactured by Rigaku Denki Corporation (now Rigaku Corporation))
Measuring method: Reflection method
X-ray intensity: 40 kv, 120 mA
X-ray source: CuK $\alpha$ ray
Slit gap: DS = 0.6, RS = 0.3, SS = 1
Goniometer: Manufactured by Rigaku Denki Corporation (now Rigaku Corporation))
Detector: Scintillation counter
Count recorder: RINT2000, Online data processing system
Scanning range: $2\theta$ = 5 to 40°
Sampling interval: 0.03°
Integration time: 1 second
As a diffracted intensity, the true diffracted intensity was used which was determined according to the following equation from the diffracted intensity obtained by measurement of a sample and the air scattering intensity.
True diffracted intensity = Diffracted Intensity of Sample - Air Scattering Intensity

(9) Average Particle Diameter of Particulate Fluororesin

The particle diameter of the powder dispersed in water was determined as an equivalent circular diameter using a grain size analyzer (Microtrac FRA manufactured by Nikkiso Co., Ltd.) employing a laser-beam diffraction/scattering method.

(10) Average Diameter of Cells and Ratio of Average Size in Surface Direction (S) to Average Size in Thickness Direction (T) (S/T)

The average diameter of cells and the ratio of an average size in the surface direction (S) to an average size in the thickness direction (T) (S/T) were determined using an image analysis software from the cross-sectional images obtained by observing the sheet cross sections in both of the MD direction (sheet longitudinal direction) and the TD direction (sheet width direction) employing a scanning electron microscope (hereinafter, abbreviated as "SEM"). The image analysis software used was image-Pro Plus ver. 4.0 manufactured by Planetron Inc. The average diameter of cells was determined by averaging the average values of the lengths, in the MD and TD directions, projected along the major and minor axes of the equivalent ellipses obtained by approximating the cross-sections of the cells as ellipses. S and T were determined by averaging the average values of the heights and widths, in the MD and TD directions, of circumscribed quadrangles of the cells (minimal rectangles each completely surrounding the whole cell and having a side parallel to the surface direction of the sheet).

(11) Color Tone (L value and b* value)

The color tone was measured using a color computer manufactured by Suga Test Instruments Co. Ltd.

(12) Thermoformability

A sheet was formed by vacuum pressure forming to make a cup-shaped formed product having a mouth inner diameter of 200 mm, a bottom inner diameter of 190 mm and a depth of 50 mm and contacting with R1 in the peripheral region of the bottom, followed by evaluating the transcription of the bottom as described below.
Good: The flat bottom has a diameter of 185 mm or more.
Moderate: The flat bottom has a diameter of 180 to less than 185 mm.
Poor: The flat bottom has a diameter of less than 180 mm.

(13) Flexibility - 1

The state when the sheet was bent at an angle of up to 180° was observed and evaluated as described below.
Poor: Fracture occurred.
Moderate: Cracking occurred on the surface.
Good: No fracture or cracking occurred.

(14) Flexibility - 2

The modulus of elasticity in tension was determined by tensile testing according to ASTM D882; the value of the modulus of elasticity in tension divided by the density was used for evaluation of the flexibility.

(15) Heat Resistance

The cup-shaped formed product made in evaluating the thermoformability was heat-treated at 150°C for 10 minutes and then placed on a flat plate to evaluate the lifting (gapping) of the periphery of the bottom as described below.
Good: No portion showing a lifting of 5 mm or more is present.
Moderate: A portion showing a lifting of 5 to 10 mm is present.
Poor: A portion showing a lifting of 10 mm or more is present.

Example 1

To a single screw extruder of 50 mm $\phi$ set at 235°C was fed a PTT composition having a melting point of 225°C in which 5 parts by weight of talc having an average particle diameter of 5 $\mu$m was added to 95 parts by weight of PTT having an intrinsic viscosity [$\eta$] of 1.3 dl/g, a carboxyl terminal group concentration of 10 eq/ton and a BPE content of 0.5 weight%, to melt the composition. The melted composition was formed in a sheet shape by extrusion from a T-die having a width of 100 mm and a gap of 0.5 mm as a mouthpiece at the linear speed of 5 m/min. through a flow channel heated at the same temperature as that of the extruder. Here, 0.1 weight% of nitrogen based on the composition was injected from the middle of the extruder and mixed with, and dissolved in, the melt. The pressure of the melt in the inlet of the T-die was 15 MPa. The melt extruded from the T-die was cast on a metal revolving roller 50 mm distant from the die and then introduced into cooling water for cool solidification to provide a foamed sheet. Here, the revolving roller and cooling water were controlled into 10°C. The time taken from the extrusion of the melt to its contact with the revolving roller was 0.6 second; the time before the melt was cooled to 68°C, or less, which is the crystallization temperature of the composition, was within 20 seconds.

The resultant foamed sheet had a thickness of 1 mm and a width of 100 mm, and suffered no crack generation even when bent at an angle of 180°. The intrinsic viscosity [$\eta$] was 1.15 dl/g; the carboxyl terminal group concentration, 15 eq/ton; the BPE content, 0.5 weight%; and the density, 0.6 g/cm$^3$. The sheet was composed of a resin composition having an isothermal crystallization peak time of 5 to 60 seconds over the whole range from 100 to 150°C, and had a crystallization calorie of 15 J/g and an isothermal crystallization peak time of 1 to 600 seconds over the range of a width of 20°C or more at 30 to 120°C. No crystallization-derived diffraction peak was observed by the wide angle x-ray diffraction; the crystallinity was 0%. When the cross section was observed using SEM, the average diameter of the cells was 50 $\mu$m and S/T was 1.2.

The resultant sheet was formed by vacuum pressure forming to provide a cup-shaped formed product having an inner diameter of 200 mm and a depth of 50 mm. The forming was carried out by first heating the sheet at 55°C by heater radiation, then allowing the sheet to contact an aluminium mold heated at 120°C at a degree of vacuum of 720 mmH and an applied pressure of 0.2 MPa to shape the sheet, and keeping the shaped sheet as it was for 120 seconds for crystallization. The resultant formed foam product had a lightweight formed product having an apparent density of 0.6 g/cm$^3$. No crystallization-derived exothermic peak was observed between 0°C and 150°C in the evaluation using DSC; the formed product had a crystallinity of 20% as determined by wide angle x-ray diffraction and was also excellent in heat resistance.

Examples 2 to 5

Foamed sheets were obtained in the same way as in Example 1 except for replacing the particles added with those shown in the respective Examples of Table 1. The results are shown in Table 2. In each case, the sheet was a sheet having excellent light weight properties and flexibility, within the scope of the present invention. Among these, the sheet of Example 2 was also excellent in whiteness at an L* of 95 and a b* of 1.

In Example 5, when tested without adding particles, the resultant sheet was excellent in light weight properties and flexibility although the cells thereof had a considerably larger diameter.

When subjected to vacuum pressure forming as described in Example 1, each of the sheets showed excellent formability and provided a formed product excellent in heat resistance.

Examples 6 and 7

Foamed sheets were obtained in the same way as in Example 1 except for changing the extrusion amount and the die gap to alter the sheet thickness. Here, the T-die gap was adjusted so that the pressure of the melt in the inlet of the T-die was 10 MPa or more. The results are shown in Table 2. In each case, the sheet was a sheet having excellent light weight properties and flexibility, within the scope of the present invention.

When subjected to vacuum pressure forming as described in Example 1, each of the sheets showed excellent formability and provided a formed product excellent in heat resistance.

Example 8

A foamed sheet was obtained in the same way as in Example 1 except for using as PTT that having an intrinsic viscosity [$\eta$] of 0.9 dl/g, a carboxyl terminal group concentration of 20 eq/ton, and a BPE content of 0.5 weight% and employing the same PTFE as that used in Example 2. Here, the T-die gap was adjusted so that the pressure of the melt in the inlet of the T-die was 10 MPa or more. The results are shown in Table 2. In each case, the sheet was a sheet having excellent light weight properties and flexibility, within the scope of the present invention. In addition, the sheet was excellent in whiteness at an L* of 95 and a b* of 1.

When subjected to vacuum pressure forming as described in Example 1, the sheet showed excellent formability and provided a formed product excellent in heat resistance.

Comparative Example 1

A foamed sheet was obtained by cool solidification without cooling the metal revolving roller and also without the introduction into water. Here, the temperature of the revolving roller was increased to 60°C owing to the heat carried by the melt; thus, it was 2 minutes before the sheet was cooled to 68°C, or less, which was the crystallization temperature thereof. The results are shown in Table 2. The resultant sheet was a sheet inferior in flexibility, which was split in two halves when bent at 180°.

In addition, the sheet was attempted to be subjected to vacuum pressure forming, but failed to be formed.

Comparative Examples 2 and 3

Foamed sheets were obtained in the same way as in Example 1 except for using, in place of 95 parts by weight of PTT, 95 weight% of PET having a intrinsic viscosity [$\eta$] of 0.85 dl/g and a carboxyl terminal group concentration of 30 eq/ton in Comparative Example 2 and 95 weight% of PBT having a intrinsic viscosity [$\eta$] of 1.0 dl/g and a carboxyl terminal group concentration of 50 eq/ton in Comparative Example 3. In Comparative Example 2, the temperature of the extruder, T-die and the like was set at a temperature 30°C higher than that in Example 1. The results are shown in Table 2.

The sheet of Comparative Example 2 was not crystallized in 60 seconds at 100 to 150°C, and the diameter of the cells was large. When the sheet was subjected to vacuum forming as described in Example 1, the resultant formed product showed a large crystallization-derived exothermic peak between 0°C and 150°C in the evaluation using DSC, had a crystallinity of 0% as determined by wide angle x-ray diffraction, and was greatly deformed when placed in 100°C hot water.

When subjected to vacuum pressure forming as described in Example 1, the sheet was capable of being formed, but provided a formed product inferior in heat resistance.

The sheet of Comparative Example 3 showed no crystallization-derived exothermic peak between 0°C and 150°C because it had been already crystallized, and was a sheet inferior in flexibility, which was split in two halves when bent at 180°.

In addition, the sheet was attempted to be subjected to vacuum pressure forming, but failed to be formed.

Example 9

A foamed sheet was obtained in the same way as in Example 1 except for using 85 parts by weight of PTT and 10 weight% of Upiron S2000, a polycarbonate manufactured by Mitsubishi Engineering Plastics Corporation, in place of 95 parts by weight of PTT. Here, the T-die gap was adjusted so that the pressure of the melt in the inlet of the T-die was 10 MPa or more. The results are shown in Table 2. In each case, the sheet was a sheet having excellent light weight properties and flexibility, within the scope of the present invention.

When subjected to vacuum pressure forming as described in Example 1, the sheet showed excellent formability and provided a formed product excellent in heat resistance.

Example 10

A foamed sheet was obtained in the same way as in Example 1 except for using 75 parts by weight of PTT and 20 weight% of PBT employed in Comparative Example 3 in place of 95 parts by weight of PTT. Here, the T-die gap was adjusted so that the pressure of the melt in the inlet of the T-die was 10 MPa or more. The results are shown in Table 2. In each case, the sheet was a sheet having excellent light weight properties and flexibility, within the scope of the present invention.

When subjected to vacuum pressure forming as described in Example 1, the sheet showed excellent formability and provided a formed product excellent in heat resistance.

Example 11

A sheet was obtained in the same way as in Example 1 except for using a PTT composition in which 5 parts by weight of unfired PTFE powder having a melting point of 310°C or more and an average particle diameter of 3.5 $\mu$m was added to 95 parts by weight of PTT having an intrinsic viscosity [η] of 1.3 dl/g, a carboxyl terminal group concentration of 10 eq/ton and a BPE (DE) content of 0.5 weight%, and employing a T-die having a width of 100 mm and a gap of 0.4 mm as a mouthpiece.

The resultant foamed sheet had a thickness of 0.5 mm and a width of 100 mm, and was excellent in whiteness at an L* of 95 and a b* of 1. The sheet also had an intrinsic viscosity [η] of 1.15 dl/g, a carboxyl terminal group concentration of 15 eq/ton, a BPE content of 0.5 weight% and an apparent density of 0.6 g/cm$^3$. The sheet was composed of a resin composition having an isothermal crystallization peak time of 5 to 60 seconds over the whole range from 100 to 150°C, and had a crystallization calorie of 15 J/g and an isothermal crystallization peak time of 1 to 600 seconds over the range of a width of 20°C or more at 30 to 120°C. No crystallization-derived diffraction peak was observed by the wide angle x-ray diffraction; the crystallinity was 0%.

When subjected to vacuum pressure forming as described in Example 1, the sheet showed excellent formability and provided a formed product excellent in heat resistance.

Examples 12 to 15

Foamed sheets were obtained in the same way as in Example 1 except for replacing the types and/or addition amounts of the PTFE particles added with those shown in the respective Examples of Table 1. The results are shown in Table 2. In each case, the sheet was an excellent sheet having characteristics within the scope of the present invention.

When subjected to vacuum pressure forming as described in Example 1, each of the sheets showed excellent formability and provided a formed product excellent in heat resistance.

Example 16

A foamed sheet was obtained in the same way as in Example 1 except for changing the extrusion amount and the die gap to alter the sheet thickness and replacing the type of the PTFE particles added with that shown in Table 1. Here, the T-die gap was adjusted so that the pressure of the melt in the inlet of the T-die was 10 MPa or more. The results are shown in Table 2. The resultant sheet was an excellent sheet having characteristics within the scope of the present invention.

When subjected to vacuum pressure forming as described in Example 1, the sheet showed excellent formability and provided a formed product excellent in heat resistance.

Comparative Example 4

There was used a PTT composition having a melting point of 225°C in which 0.5 weight% of the same talc as that in Example 1 was added to PTT having an intrinsic viscosity [η] of 0.78 dl/g, a carboxyl terminal group concentration of 7 eq/ton and a BPE (DE) content of 0.5 weight%, which was fed to a single screw extruder of 50 mm $\phi$ set at 265°C to melt the composition. The melt composition was extruded into a sheet shape by extrusion from a T-die having a width of 550 mm and a gap of 1.5 mm as a mouthpiece at a linear speed of 5 m/min. through a flow channel heated at the same temperature as that of the extruder. Here, 4 weight% of n-butane based on the composition was injected from the middle of the extruder and mixed with, and dissolved in, the melt. The melt extruded from the T-die was cast on a metal revolving roller 50 mm distant from the die, then introduced into cooling water for cool solidification to provide a foamed sheet. Here, the revolving roller and cooling water were controlled into 10°C. The time taken from the extrusion of the melt to the contact with the revolving roller was 0.6 second; the time before the melt was cooled to 68°C, or less, which is the crystallization temperature of the composition, was within 20 seconds.

The resultant foamed sheet had a thickness of 3 mm and a width of 500 mm. The sheet also had an intrinsic viscosity [η] of 0.75 dl/g, a carboxyl terminal group concentration of 11 eq/ton, a BPE content of 0.5 weight%, and a density of 0.36 g/cm$^3$. However, the sheet was crystallized at a crystallization calorie of 0 J/g and a crystallinity of 23%, and was a sheet inferior in flexibility, which was split in two halves when bent at 180°. In addition, the sheet was attempted to be subjected to vacuum pressure forming, but failed to be formed.

Example 17

This Example is an example of a copolymerized PET.

A foamed sheet was obtained in the same way as in Example 11 except for using 95 weight% of PET having a melting point of 230°C, copolymerized with 10 mole% of 1,4-butanediol, having an intrinsic viscosity [η] of 0.68 dl/g and a carboxyl terminal group concentration of 30 eq/ton, in place of 95 parts by weight of PTT.

The results are shown in Table 2. The sheet was a sheet having excellent light weight properties and flexibility, within the scope of the present invention.

When subjected to vacuum pressure forming in the same way as in Example 1, the sheet was capable of providing a formed product without problems. The product was slightly inferior in flexibility and heat resistance, which, however, were at practically problem-free levels.

Example 18

A sheet was obtained in the same way as in Example 1 except for introducing the sheet into cooling water for cool solidification, followed by allowing the sheet to contact, for 20 seconds, a revolving roller having a satin finished surface, heated at 120°C to transcript the satin pattern on the roller thereto and simultaneously crystallize the sheet. The resultant sheet had the desired satin pattern on the surface and was also excellent in heat resistance.

The present invention has been specifically described with respect to particular embodiments. However, it will be apparent to those skilled in the art that various changes and modifications may be made without departing from the spirit and scope of the present invention.

[Table 1]

| | Sheet composition | | | | | Particles added | | | | |
|---|---|---|---|---|---|---|---|---|---|---|
| | Limiting viscosity | COOH | DE content | PArT content | PTT content | Type | Average particle diameter | Shape | Melting point | Amount |
| | dl/g | eq/ton | weight% | weight% | weight% | | μm | | °C | weight% |
| Ex. 1 | 1.15 | 15 | 0.5 | 95 | 95 | Talc | 5 | Flat | - | 5 |
| Ex. 2 | 1.15 | 15 | 0.5 | 99 | 99 | PTFE | 5 | Flat | ≥310 | 1 |
| Ex. 3 | 1.05 | 25 | 0.5 | 97 | 97 | Fluorine mica | 2 | Flat | - | 3 |
| Ex. 4 | 1.15 | 15 | 0.5 | 95 | 95 | Layer silicate | 5 | Flat | - | 5 |
| Ex. 5 | 1.15 | 15 | 0.5 | 100 | 100 | None | - | - | - | - |
| Ex. 6 | 1.15 | 15 | 0.5 | 95 | 95 | Talc | 5 | Flat | - | 5 |
| Ex. 7 | 1.15 | 15 | 0.5 | 95 | 95 | Talc | 5 | Flat | - | 5 |
| Ex. 8 | 0.85 | 25 | 0.5 | 99 | 99 | PTFE | 5 | Flat | ≥ 310 | 1 |
| Ex.9 | 1.00 | 15 | 0.5 | 95 | 75 | Talc | 5 | Flat | - | 5 |
| Ex.10 | 1.10 | 20 | 0.5 | 95 | 85 | Talc | 5 | Flat | - | 5 |
| Comp.Ex. 1 | 1.15 | 15 | 0.5 | 95 | 95 | Talc | 5 | Flat | - | 5 |
| Comp.Ex. 2 | 0.85 | 30 | - | 95 | 0 | Talc | 5 | Flat | - | 5 |
| Comp.Ex. 3 | 1.00 | 50 | - | 95 | 0 | Talc | 5 | Flat | - | 5 |
| Comp. Ex. 4 | 0.78 | 7 | 0.50 | 99.5 | 95 | Talc | 5 | Flat | - | 0.5 |
| Ex.11 | 1.15 | 15 | 0.5 | 95 | 95 | PTFE | 3.5 | Flat | ≥310 | 5 |
| Ex. 12 | 1.15 | 15 | 0.5 | 95 | 95 | PTFE | 5 | Flat | 327 | 5 |
| Ex.13 | 0.85 | 25 | 0.5 | 97 | 97 | PTFE | 0.5 | Flat | 328 | 3 |
| Ex. 14 | 1.15 | 15 | 0.5 | 99 | 99 | PTFE | 3.5 | Flat | ≥310 | 1 |
| Ex. 15 | 1.15 | 15 | 0.5 | 90 | 90 | PTFE | 3.5 | Flat | ≥310 | 10 |
| Ex. 16 | 1.15 | 15 | 0.5 | 95 | 95 | PTFE | 5 | Flat | 327 | 5 |
| Ex. 17 | 0.65 | 35 | 0.5 | 95 | 0 | PTFE | 3.5 | Flat | ≥ 310 | 5 |

[Table 2]

| | Sheet characteristics | | | | | | | | | | | | | | |
|---|---|---|---|---|---|---|---|---|---|---|---|---|---|---|---|
| | Thickness | Apparent density | Crystalli-zation calorie | Crystalli-zation temperature width 1 | Crystalli-zation temperature width 2 | Crystal-linity | Cell diameter | S/T | Particle diameter | Color tone L* | b* | Formability | Flexibility - 1 | Flexibility - 2 | Heat resistance |
| | mm | g/cm³ | J/g | °C | °C | % | μm | | μm | | | | | MPa/cm³/g | |
| Ex. 1 | 1 | 0.6 | 15 | 50 | ≥ 20 | 0 | 50 | 1.5 | | 75 | 1 | G | G | 950 | G |
| Ex. 2 | 1 | 0.6 | 15 | 50 | ≥ 20 | 0 | 20 | 1.2 | | 95 | 1 | G | G | 800 | G |
| Ex. 3 | 1 | 0.55 | 15 | 50 | ≥ 20 | 0 | 20 | 1.2 | | 80 | 1 | G | G | 950 | G |
| Ex. 4 | 1 | 0.65 | 15 | 50 | ≥ 20 | 0 | 30 | 1.2 | | 80 | 1 | G | G | 950 | G |
| Ex. 5 | 1 | 0.8 | 15 | 50 | ≥ 20 | 0 | 150 | 1.8 | - | 85 | 1 | G | G | 1000 | G |
| Ex. 6 | 3 | 0.5 | 5 | 50 | ≥ 20 | 5 | 80 | 1.4 | | 75 | 1 | M | G | 1000 | G |
| Ex. 7 | 0.3 | 0.7 | 15 | 50 | ≥ 20 | 0 | 30 | 1.8 | | 75 | 1 | G | G | G | G |
| Ex. 8 | 0.5 | 0.7 | 15 | 50 | ≥ 20 | 0 | 20 | 1.5 | | 95 | 1 | G | G | G | G |
| Ex. 9 | 1.5 | 0.6 | 10 | 50 | ≥ 20 | 0 | 50 | 1.5 | | 78 | 1 | G | G | G | G |
| Ex. 10 | 1 | 0.6 | 10 | 50 | ≥ 20 | 0 | 50 | 1.5 | | 80 | 1 | G | G | G | G |
| Comp. Ex. 1 | 1 | 0.6 | 0 | - | - | 30 | 50 | 2.5 | | 75 | 2 | P | P | 1100 | - |
| Comp. Ex. 2 | 1 | 0.8 | 20 | None | - | 0 | 200 | 3 | | 80 | 2 | G | G | - | P |
| Comp. Ex. 3 | 1 | 1 | 0 | - | - | 35 | 100 | 1.2 | | 89 | 3 | P | P | 1700 | - |
| Comp. Ex. 4 | 3 | 0.36 | 0 | - | - | 23 | - | - | | 80 | 2 | P | P | - | - |
| Ex. 11 | 0.5 | 0.6 | 15 | 50 | ≥ 20 | 0 | 20 | 1.2 | 3 | 95 | 1 | G | G | 850 | G |
| Ex. 12 | 0.5 | 0.6 | 15 | 50 | ≥ 20 | 0 | 10 | 1.2 | 5 | 95 | 1 | G | G | 850 | G |
| Ex. 13 | 0.3 | 0.6 | 15 | 50 | ≥ 20 | 0 | 15 | 1.5 | 0.5 | 95 | 1 | G | G | 950 | G |
| Ex. 14 | 0.5 | 0.6 | 15 | 50 | ≥ 20 | 0 | 30 | 1.2 | 3 | 95 | 1 | G | G | 900 | G |
| Ex. 15 | 0.5 | 0.5 | 15 | 50 | ≥ 20 | 0 | 15 | 1.2 | 3 | 95 | 1 | G | G | 850 | G |
| Ex. 16 | 2 | 0.5 | 10 | 50 | ≥ 20 | 5 | 15 | 1.4 | 5 | 93 | 1 | M | G | 800 | G |
| Ex. 17 | 0.5 | 0.8 | 0 | 50 | ≥ 20 | 0 | 200 | 1.8 | 3 | 75 | 5 | G | G | 1000 | M |

The present application is based on Japanese Patent Application No. 2005-098111 filed March 30, 2005 and Japanese Patent Application No. 2005-109799 filed April 6, 2005, the contents of which are incorporated herein by reference.

Industrial Applicability

The foamed sheet of the present invention is excellent in flexibility, light weight properties and thermoformability and can provide a formed product excellent in light weight properties, flexibility, heat resistance, chemical resistance and weather resistance by thermoforming such as vacuum forming. Thus, the foamed sheet is useful in various applications including food containers, packaging materials, construction materials, and optical reflectors.

**Claims**

1. A polyester foamed sheet composed of a resin composition comprising 50 to 100 weight% of a polyalkylene terephthalate, wherein:

   the resin composition has an isothermal crystallization peak time of 5 to 60 seconds at any temperature of 100 to 150°C, and wherein the sheet has:

   (A) an apparent density of 0.05 to 1.25 $g/cm^3$ and
   (B) a temperature at which an exothermic peak derived from crystallization is observed of 0 to 150°C when thermal analysis is performed using an input compensation type differential scanning calorimeter.

2. The polyester foamed sheet according to claim 1, wherein the sheet has a crystallization peak time of 1 to 600 seconds at any temperature of 30 to 120°C.

3. The polyester foamed sheet according to claim 1 or 2, wherein the polyalkylene terephthalate comprises 50 to 100 weight% of polytrimethylene terephthalate.

4. The polyester foamed sheet according to any one of claims 1 to 3, wherein the sheet has a thickness of 1 $\mu$m to 10 mm.

5. The polyester foamed sheet according to any one of claims 1 to 4, wherein the sheet contains cells having an average diameter of not more than 1/2 the thickness of the sheet and of 0.001 to 100 $\mu$m.

6. The polyester foamed sheet according to any one of claims 1 to 5, wherein the resin composition comprises 50 to 99.9 weight% of the polyalkylene terephthalate and 0.1 to 50 weight% of a fluororesin.

7. The polyester foamed sheet according to claim 6, wherein the fluororesin has a melting point of 280°C or more.

8. The polyester foamed sheet according to claim 6 or 7, wherein the fluororesin is polytetrafluoroethylene.

9. The foamed sheet according to any one of claims 6 to 8, wherein the fluororesin has a particulate shape having an average particle diameter of 0.01 to 100 $\mu$m.

10. A method of producing a polyester foamed sheet, comprising the steps of:

    mixing and dissolving, in a melt comprising 50 to 100 weight% of a polyalkylene terephthalate, a substance which is gaseous at the melt temperature of the melt and ordinary pressure;
    extruding the resultant melt mix from a mouthpiece for sheeting while bubbling the substance; and
    cool-solidifying the extruded sheet.

11. The method of producing a polyester foamed sheet according to claim 10, wherein the melt comprises 50 to 99.9 weight% of a polyalkylene terephthalate and 0.1 to 50 weight% of a fluororesin.

12. The method of producing a polyester foamed sheet according to claim 10 or 11, wherein the substance is gaseous at room temperature and ordinary pressure.

13. The method of producing a polyester foamed sheet according to claim 12, wherein the substance is at least one selected from the group consisting of nitrogen, helium, argon, and water.

14. The method of producing a polyester foamed sheet according to claim 13, wherein the substance is nitrogen.

15. The method of producing a polyester foamed sheet according to any one of claims 10 to 14, wherein the mouthpiece has a slit shape and the cool-solidifying step comprises the steps of:

   casting the melt mix on a metal roller; and
   placing the cast melt mix in water.

16. A formed foam product obtained by thermoforming the polyester foamed sheet according to any one of claims 1 to 9.

17. The formed foam product according to claim 16, wherein the exothermic peak derived from crystallization is 5 J/g or less when thermal analysis is performed between 0°C and 150°C using an input compensation type differential scanning calorimeter.

18. A forming method comprising the step of heating and forming the polyester foamed sheet according to any one of claims 1 to 9.

19. The forming method according to claim 18, wherein the polyester foamed sheet is formed by vacuum pressure forming.

20. The forming method according to claim 18 or 19, wherein the step of heating and forming the polyester foamed sheet comprises the steps:

   heating the sheet at 30 to 100°C; and
   forming the heated sheet using a mold at 60 to 180°C.

21. The forming method according to claim 18, wherein the step of heating and forming the polyester foamed sheet comprises the step of crystallizing the polyester foamed sheet while allowing the sheet to contact a revolving roller heated at 60 to 180°C to transcript the roller surface thereto.

## INTERNATIONAL SEARCH REPORT

| International application No. |
| --- |
| PCT/JP2006/306555 |

A. CLASSIFICATION OF SUBJECT MATTER
*C08J9/12*(2006.01), *B29C47/88*(2006.01), *C08L67/00*(2006.01), *B29K67/00* (2006.01)

According to International Patent Classification (IPC) or to both national classification and IPC

B. FIELDS SEARCHED

Minimum documentation searched (classification system followed by classification symbols)
C09J9/00-9/42, B29C47/00-47/96

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 3-199243 A  (Sekisui Plastics Co., Ltd.),<br>30 August, 1991 (30.08.91),<br>Claims; page 4, upper right column, line 12 to lower left column, line 13; page 5, upper left column, line 13 to lower left column, line 4; examples<br>& EP 437094 A1          & AU 9068540 A<br>& CA 2033133 A          & ZA 9010414 A<br>& US 5134028 A          & ES 2071791 A<br>& KR 178523 B1 | 1-5,10,12-19<br>6-9,11,20,21 |
| X<br>Y | JP 6-145404 A  (Sekisui Plastics Co., Ltd.),<br>24 May, 1994 (24.05.94),<br>Claims; Par. No. [0022]; examples<br>(Family: none) | 1-5,10,12,<br>15-19<br>6-9,11,20,21 |

| [X] Further documents are listed in the continuation of Box C. | | [ ] See patent family annex. |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 May, 2006 (23.05.06) | Date of mailing of the international search report<br>06 June, 2006 (06.06.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| | International application No. |
|---|---|
| | PCT/JP2006/306555 |

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 00/36000 A1  (Sekisui Plastics Co., Ltd.),<br>22 June, 2000 (22.06.00),<br>Claim 3; page 12, lines 1 to 5<br>& EP 1160274 A1        & US 6527993 B1<br>& AU 1685000 A          & CA 2356636 A<br>& CN 1333714 A          & TW 458869 B | 6-9 |
| Y | JP 2000-63553 A  (Sekisui Plastics Co., Ltd.),<br>29 February, 2000 (29.02.00),<br>Claims; Par. No. [0024]<br>(Family: none) | 20,21 |
| Y | JP 2001-205654 A  (Sekisui Plastics Co., Ltd.),<br>31 July, 2001 (31.07.01),<br>Claims; Par. Nos. [0035] to [0036]<br>(Family: none) | 20,21 |

Form PCT/ISA/210 (continuation of second sheet) (April 2005)

## INTERNATIONAL SEARCH REPORT

| International application No. |
|---|
| PCT/JP2006/306555 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
This international application includes the following two inventions:
   1. claims 1-9, 16-21
   2. claims 10-15
Claims 10-15 do not involve the technical features of foamed sheet as defined in claim 1.
Further, Comparative Examples 1-4 in the description satisfy the requirements of claim 10, but no foamed sheets defined in claim 1 are obtained in the Comparative Examples. Thus, claims 10-15 do not correspond to processes particularly suitable for production of the foamed sheet defined in claim 1.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5117501 A
- JP 11152357 A
- JP 2002226619 A

- JP 2005098111 A
- JP 2005109799 A